# EUROPEAN PATENT APPLICATION

(11) **EP 4 703 214 A1**
(43) Date of publication of application: **04.03.2026**
(21) Application number: 25170333.6
(22) Date of filing: 14.04.2025
(51) Int. Cl.: B60R 16/023, B60R 25/01

(54) **ANTI-THEFT BRACKET**

(30) Priority: 29.08.2024 KR 20240116972
(71) Applicant: Hyundai Motor Company, Seoul 06797 (KR); Kia Corporation, Seoul 06797 (KR)
(72) Inventor: LEE, Bo Ram, 18280 Hwaseong-si, Gyeonggi-do (KR); OH, Jung Hoon, 18280 Hwaseong-si, Gyeonggi-do (KR); JEONG, Yong Seok, 18280 Hwaseong-si, Gyeonggi-do (KR)
(74) Representative: Viering, Jentschura & Partner mbB Patent- und Rechtsanwälte

(57) **Abstract**

Provided is an anti-theft bracket mounted on an edge of a controller adjacent to a connector, including: an upper cover covering a portion of the connector and the edge of the controller adjacent to the connector; an outer cover covering a side surface of the controller; and a snap-fit arm extending vertically from the upper cover and detachably attached to the controller.

## Description

### CROSS-REFERENCE TO RELATED APPLICATION

This application is based on and claims the benefit of priority to Korean Patent Application No. 10-2024-0116972, filed on August 29, 2024, in the Korean Intellectual Property Office, the disclosure of which is incorporated herein in its entirety by reference.

### TECHNICAL FIELD

The present disclosure relates to an anti-theft bracket designed to prevent theft, and more particularly, to an anti-theft bracket designed to prevent a thief from removing and replacing a controller.

### BACKGROUND

In a general starting system, a driver may insert an ignition key into a starter switch and turn it to a start position to start a vehicle. However, since the ignition key of such a starting system can be easily copied, there is a risk that the vehicle could be easily stolen by a thief. To deal with this, a starting system using a smart key is known in the art.

The starting system using a smart key may include a smart key carried by the driver, a controller configured to determine whether the driver is an authorized driver through two-way communications with the smart key, an engine controller configured to start and drive an engine according to signals from the controller, and a starter switch configured to start the vehicle by the driver's operation. The smart key may have a semiconductor chip such as a microprocessor, a memory, and the like, and the smart key may generate a unique signal within a predetermined distance. The smart key may receive an authentication request signal from the controller, and transmit a pre-stored authentication signal to the controller. The smart key may transmit and receive the signals to and from the controller through two-way communications such as LF, RF, and UWB. The controller may request the authentication signal from the smart key, receive the authentication signal from the smart key to determine whether the driver is an authorized driver, and transmit an output signal to the engine controller through IMMO communications, and the engine controller may control a relay to start the vehicle.

However, even when the smart key system is applied, the thief who breaks a vehicle door and enters the interior of the vehicle may steal the vehicle by removing and replacing the controller, so such a smart key system may not prevent the vehicle theft. Accordingly, an anti-theft bracket designed to prevent the thief from easily removing and replacing the controller or removing a connector has been proposed.

However, since the anti-theft bracket according to the related art has a complex structure and shape, it may be difficult to apply the related art anti-theft bracket to the controller mounted in a narrow space of the vehicle.

In addition, considering that parts of the controller may be easily broken when the thief attempts to remove the controller, it may be difficult to effectively prevent the vehicle theft using only the related art anti-theft bracket.

The above information described in this background section is provided to assist in understanding the background of the inventive concept, and may include any technical concept which is not considered as the prior art that is already known to those skilled in the art.

### SUMMARY

The present disclosure has been made to solve the above-mentioned problems occurring in the prior art while advantages achieved by the prior art are maintained intact.

An aspect of the present disclosure provides an anti-theft bracket designed to have a simple and compact structure so as to be easily mounted on a controller provided in a narrow space of a vehicle, and to reliably prevent the controller from being removed.

According to an aspect of the present disclosure, an anti-theft bracket mounted on an edge of a controller adjacent to a connector may include: an upper cover covering a portion of the connector and the edge of the controller adjacent to the connector; an outer cover covering a side surface of the controller; and a snap-fit arm extending vertically from the upper cover and detachably attached to the controller.

The upper cover may include a first edge portion located above the connector, and a second edge portion spaced apart outward from the edge of the controller. The outer cover may extend vertically from the second edge portion.

The anti-theft bracket may further include a projection protruding vertically from the first edge portion of the upper cover.

The outer cover may include a main cover portion covering the side surface of the controller, and a pair of side portions provided on both sides of the main cover portion.

The outer cover may further include an extension cover portion extending downward from the main cover portion and the pair of side portions.

The extension cover portion may include a chamfer edge portion provided on a bottom edge thereof, and the chamfer edge portion may have a chamfer surface.

The chamfer edge portion may include an upper round portion provided on a top edge of the chamfer surface, and a lower round portion provided on a bottom edge of the chamfer surface.

The anti-theft bracket may further include a reinforcing portion provided on an upper portion of the snap-fit arm, and a thickness of the reinforcing portion may be greater than that of the snap-fit arm.

The upper cover may include a third edge portion and a fourth edge portion connected between the first edge portion and the second edge portion, and a pair of engagement projections may protrude downward from the third edge portion and the fourth edge portion, respectively.

The pair of engagement projections may be inserted into mounting recesses of the controller, respectively.

### BRIEF DESCRIPTION OF THE DRAWINGS

The above and other objects, features and advantages of the present disclosure will be more apparent from the following detailed description taken in conjunction with the accompanying drawings:
FIG. 1 illustrates a plan view of an anti-theft bracket according to an exemplary embodiment of the present disclosure, which is mounted on a controller;
FIG. 2 illustrates a perspective view of an anti-theft bracket according to an exemplary embodiment of the present disclosure;
FIG. 3 illustrates a view, which is viewed in the direction of arrow A of FIG. 2;
FIG. 4 illustrates a view, which is viewed in the direction of arrow B of FIG. 2;
FIG. 5 illustrates a view, which is viewed in the direction of arrow C of FIG. 2;
FIG. 6 illustrates an enlarged view of portion E of FIG. 4;
FIG. 7 illustrates a view, which is viewed in the direction of arrow D of FIG. 2;
FIG. 8 illustrates a view, which is viewed in the direction of arrow H of FIG. 1;
FIG. 9 illustrates a view, which is viewed in the direction of arrow F of FIG. 8;
FIG. 10 illustrates a view, which is viewed in the direction of arrow G of FIG. 8;
FIG. 11 illustrates a cross-sectional view, taken along line J-J of FIG. 1; and
FIG. 12 illustrates a cross-sectional view, taken along line K-K of FIG. 11.

### DETAILED DESCRIPTION

Hereinafter, exemplary embodiments of the present disclosure will be described in detail with reference to the accompanying drawings. In the drawings, the same reference numerals will be used throughout to designate the same or equivalent elements. In addition, a detailed description of well-known techniques associated with the present disclosure will be ruled out in order not to unnecessarily obscure the gist of the present disclosure.

Terms such as first, second, A, B, (a), and (b) may be used to describe the elements in exemplary embodiments of the present disclosure. These terms are only used to distinguish one element from another element, and the intrinsic features, sequence or order, and the like of the corresponding elements are not limited by the terms. Unless otherwise defined, all terms used herein, including technical or scientific terms, have the same meanings as those generally understood by those with ordinary knowledge in the field of art to which the present disclosure belongs. Such terms as those defined in a generally used dictionary are to be interpreted as having meanings equal to the contextual meanings in the relevant field of art, and are not to be interpreted as having ideal or excessively formal meanings unless clearly defined as having such in the present application.

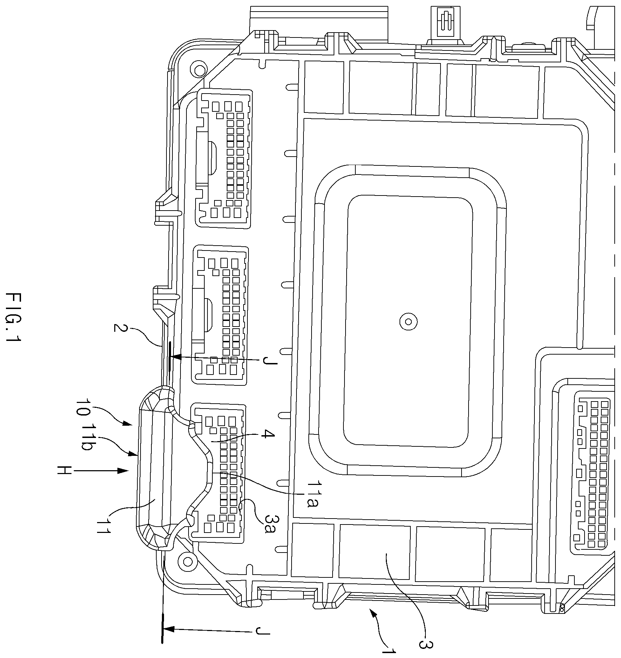

Referring to FIG. 1, an anti-theft bracket 10 according to an exemplary embodiment of the present disclosure may be mounted on an edge of a controller 1 of a vehicle adjacent to a connector 4.

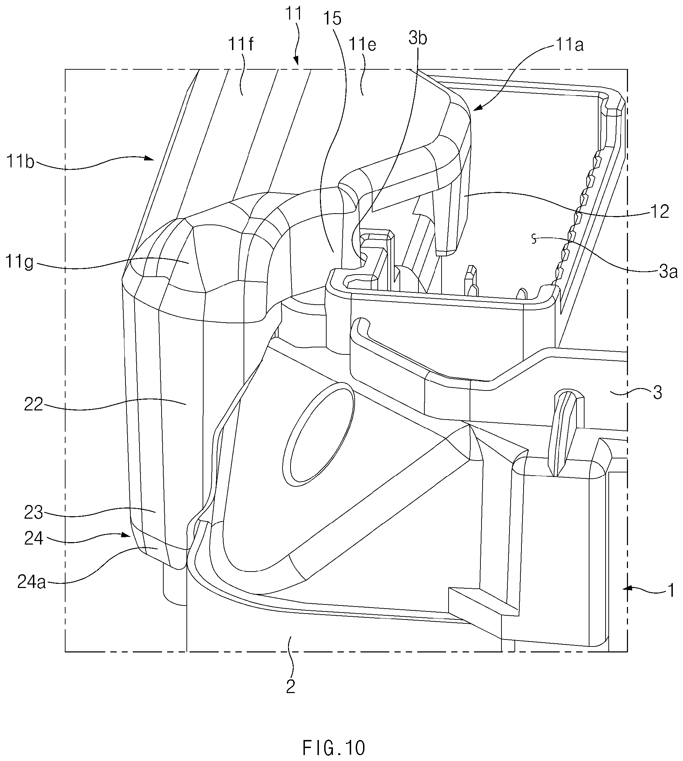

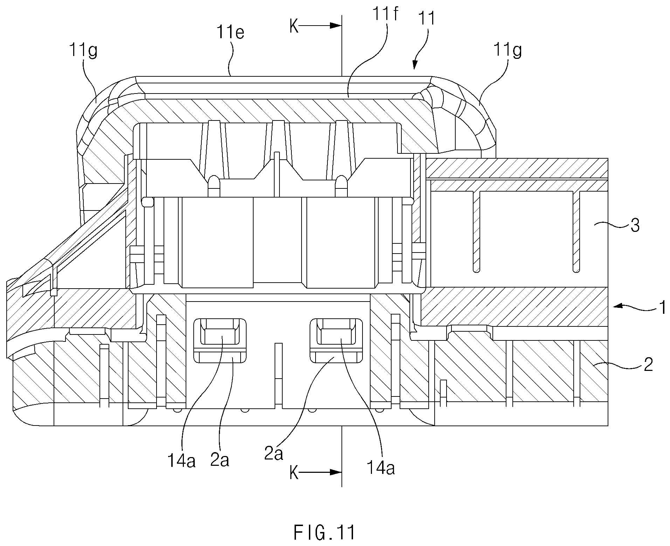

Referring to FIGS. 10 and 11, the controller 1 such as a body domain controller (BDC), an integrated body control unit (IBU) may be configured to control the driving of the vehicle, the operation of each electric/electronic component, and the like. The controller 1 may include a lower case 2, and an upper case 3 attached to an upper portion of the lower case 2. A plurality of electronic components and a printed circuit board (PCB) may be mounted in internal spaces of the lower case 2 and the upper case 3. The upper case 3 may have an accommodating recess 3a adjacent to one edge thereof, and the connector 4 may be received in the accommodating recess 3a. The upper case 3 may have two mounting recesses 3b adjacent to the accommodating recess 3a. According to an exemplary embodiment, the connector 4 may be an immobilizer connector related to authentication.

Referring to FIG. 1, the upper case 3 may have a plurality of accommodating recesses 3a adjacent to one edge thereof, and two mounting recesses 3b may be adjacent to each accommodating recess 3a.

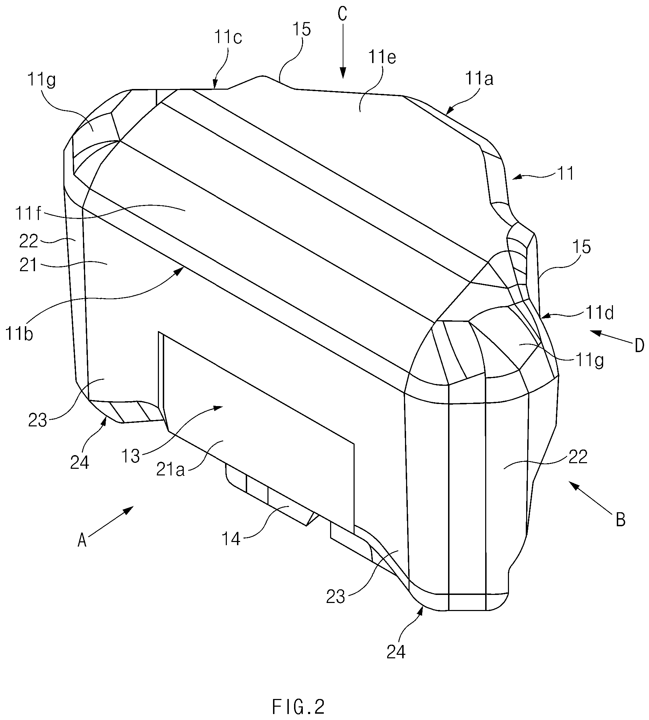

Referring to FIG. 1, the anti-theft bracket 10 may include an upper cover 11 extending horizontally. The upper cover 11 may be configured to cover a portion of the connector 4 and the edge of the controller 1 adjacent to the connector 4. Referring to FIG. 2, the upper cover 11 may include a first edge portion 11a, a second edge portion 11b opposing the first edge portion 11a, and a third edge portion 11c and a fourth edge portion 11d located between the first edge portion 11a and the second edge portion 11b. The first edge portion 11a may be parallel to the second edge portion 11b, and a length of the first edge portion 11a may be less than that of the second edge portion 11b. The third edge portion 11c may extend from one end of the first edge portion 11a to one end of the second edge portion 11b, and the fourth edge portion 11d may extend from the other end of the first edge portion 11a to the other end of the second edge portion 11b.

Referring to FIG. 1, the first edge portion 11a may be located above the accommodating recess 3a of the upper case 3 of the controller 1, and accordingly the first edge portion 11a may be located above the connector 4 of the controller 1. The second edge portion 11b may be spaced apart outward from the edge of the upper case 3 of the controller 1.

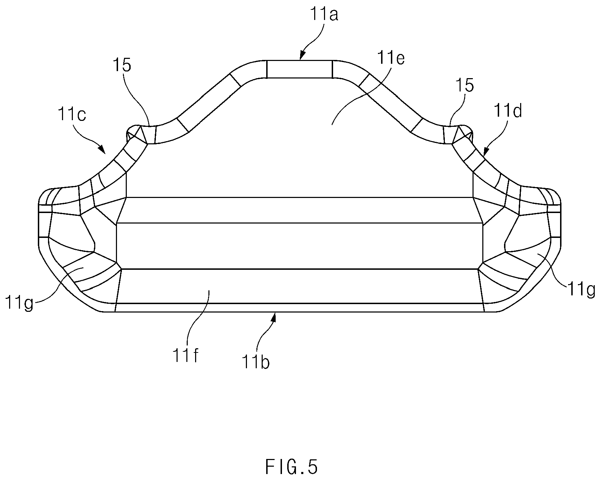

Referring to FIGS. 2 and 5, the upper cover 11 may include a flat surface 11e defined between the first edge portion 11a, the third edge portion 11c, and the fourth edge portion 11d. The flat surface 11e may be horizontally flat, and the second edge portion 11b may be located lower than the flat surface 11e.

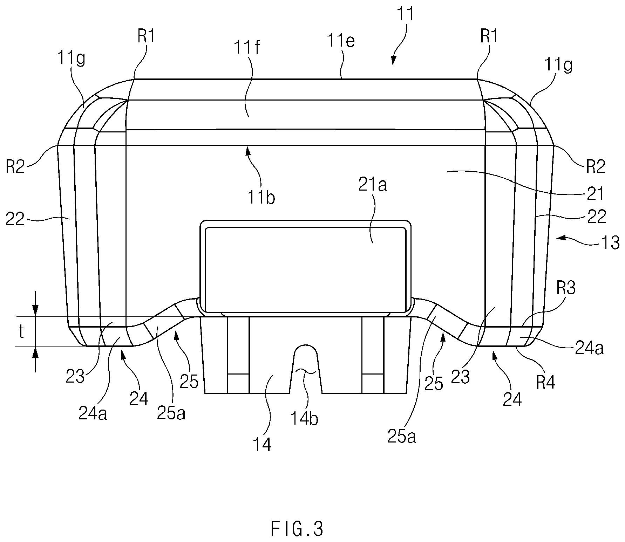

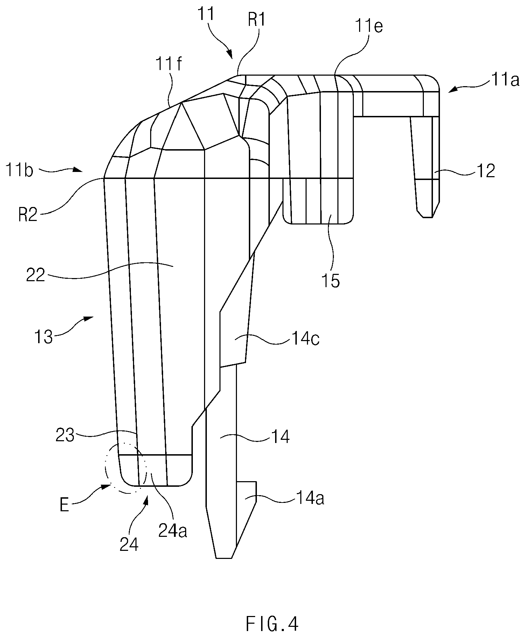

Referring to FIGS. 2 and 5, the upper cover 11 may include a curved surface 11f defined between the second edge portion 11b, the third edge portion 11c, and the fourth edge portion 11d. Referring to FIGS. 2 and 4, the curved surface 11f may be curved from the flat surface 11e toward the second edge portion 11b. Referring to FIGS. 2 and 3, the upper cover 11 may have a pair of side portions 11g curved downward from both sides of the curved surface 11f.

Referring to FIG. 4, the upper cover 11 may include an upper round portion R1 provided on a top edge of the curved surface 11f, and a lower round portion R2 provided on a bottom edge of the curved surface 11f. The upper round portion R1 may be rounded with a slight radius at the top edge of the curved surface 11f, and the lower round portion R2 may be rounded with a slight radius at the bottom edge of the curved surface 11f.

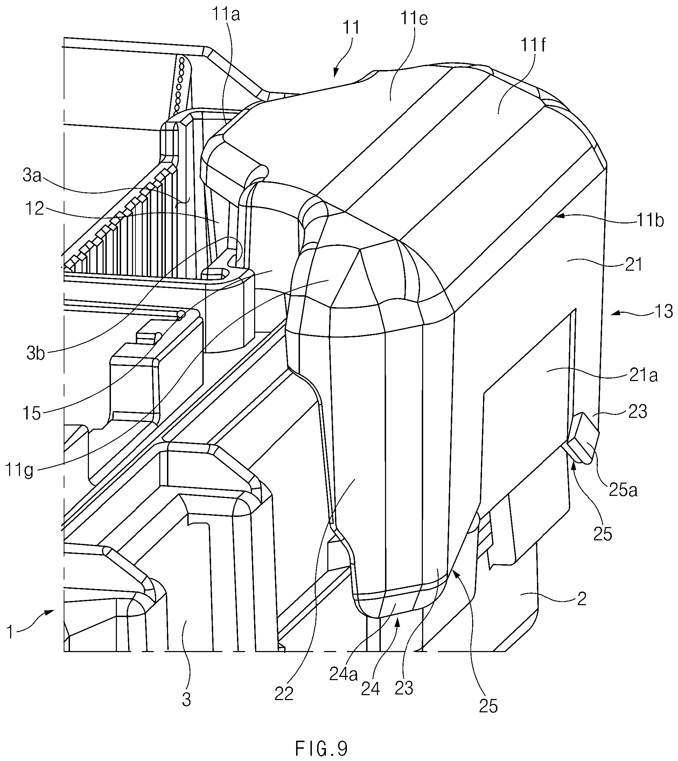

Referring to FIGS. 9 and 10, the anti-theft bracket 10 according to an exemplary embodiment of the present disclosure may include a projection 12 protruding vertically downward from the first edge portion 11a of the upper cover 11. The projection 12 may protrude toward the accommodating recess 3a of the controller 1, and the projection 12 may be adjacent to or contact a top surface of the connector 4 of the controller 1. For example, the projection 12 may be inserted into a recess of the connector 4. Accordingly, a tool may be prevented from being inserted between the projection 12 and the connector 4 so that a thief may be prevented from removing the connector 4 of the controller 1 using the tool.

Referring to FIGS. 2 to 4, the anti-theft bracket 10 according to an exemplary embodiment of the present disclosure may include an outer cover 13 extending vertically from the second edge portion 11b of the upper cover 11. The outer cover 13 may cover a side surface of the controller 1.

Referring to FIGS. 2 and 3, the outer cover 13 may include a main cover portion 21 covering a side surface of the upper case 3 of the controller 1, and a pair of side portions 22 provided on both sides of the main cover portion 21. The main cover portion 21 may have a flat surface 21a provided at the center thereof, and a sticker, a mark, and the like indicating the specifications of the anti-theft bracket 10 may be provided on the flat surface 21a of the main cover portion 21. Each side portion 22 may be curved from the main cover portion 21 toward the first edge portion 11a of the upper cover 11.

When the thief attempts to grip the side portions 22 of the outer cover 13 using a grip tool such as a longnose nipper and a pincer, the grip tool may slip from the curved side portions 22, and accordingly the grip tool may be prevented from gripping the outer cover 13 of the anti-theft bracket 10 so that the thief may be prevented from removing the connector 4.

Referring to FIGS. 2 and 3, the outer cover 13 may further include a pair of extension cover portions 23 extending downward from the main cover portion 21 and the pair of side portions 22. The main cover portion 21 may cover the side surface of the upper case 3 of the controller 1 and the extension cover portions 23 may cover a side surface of the lower case 2 of the controller 1 so that the outer cover 13 may cover an interface between the upper case 3 and the lower case 2, and accordingly the tool may be prevented from being inserted to the interface between the upper case 3 and the lower case 2.

Referring to FIG. 3, the pair of extension cover portions 23 may extend downward from the flat surface 21a of the main cover portion 21, and the pair of extension cover portions 23 may be connected to the main cover portion 21 through a pair of inclined portions 25. Each extension cover portion 23 may have a chamfer edge portion 24 provided on a bottom edge thereof, and the chamfer edge portion 24 may have a chamfer surface 24a. Each inclined portion 25 may have a chamfer surface 25a connected to the chamfer surface 24a of the chamfer edge portion 24.

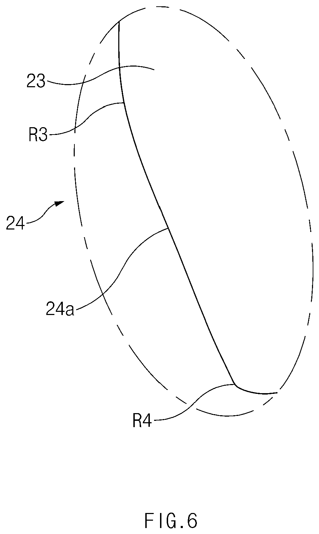

Referring to FIG. 6, the chamfer edge portion 24 may include an upper round portion R3 provided on a top edge of the chamfer surface 24a, and a lower round portion R4 provided on a bottom edge of the chamfer surface 24a. The upper round portion R3 may be rounded with a slight radius at the top edge of the chamfer surface 24a, and the lower round portion R4 may be rounded with a slight radius at the bottom edge of the chamfer surface 24a.

When the thief attempts to grip the curved surface 11f of the upper cover 11 and the chamfer edge portion 24 of the outer cover 13 using the grip tool, the grip tool may slip from the round portions R1 and R2 of the curved surface 11f and the round portions R3 and R4 of the chamfer edge portion 24. Accordingly, the grip tool may be prevented from gripping the upper cover 11 and the outer cover 13 of the anti-theft bracket 10 so that the thief may be prevented from removing the connector 4.

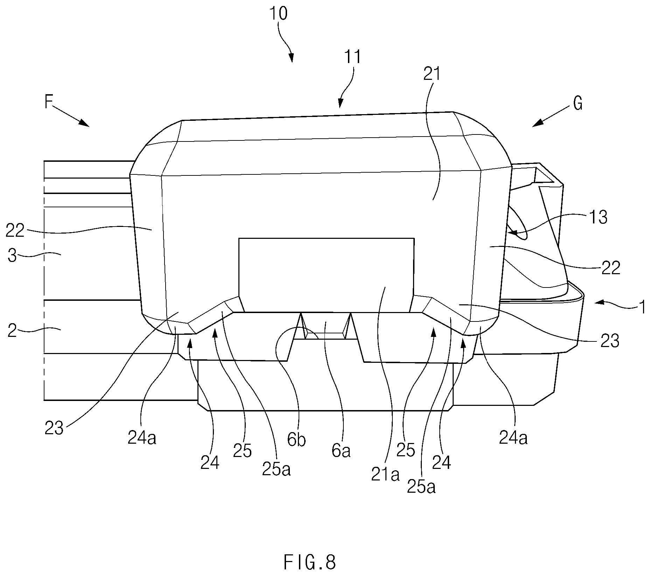

Referring to FIG. 8, the upper case 3 may have a hook 6a, and the lower case 2 may have an opening 6b in which the hook 6a of the upper case 3 is received. The hook 6a of the upper case 3 may be inserted into the opening 6b of the lower case 2 so that the upper case 3 and the lower case 2 may be joined. The hook 6a and the opening 6b may be aligned with the connector 4, and the outer cover 13 of the anti-theft bracket 10 may cover a portion of the hook 6a and a portion of the opening 6b.

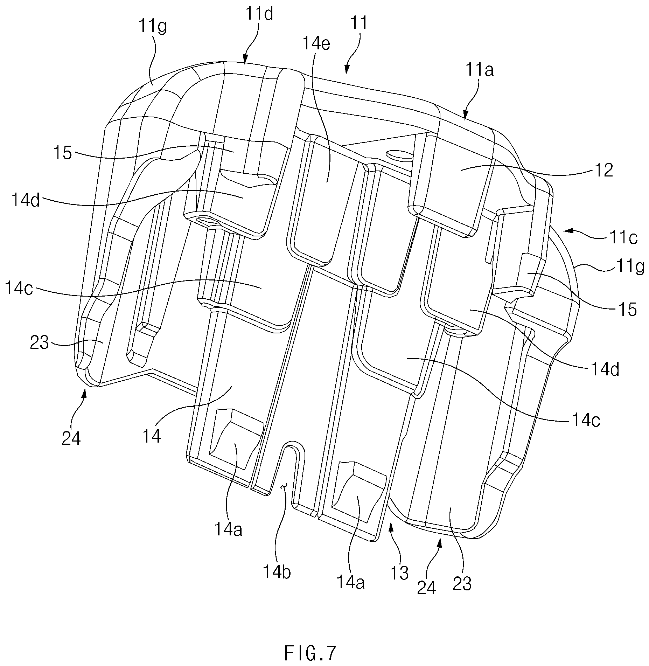

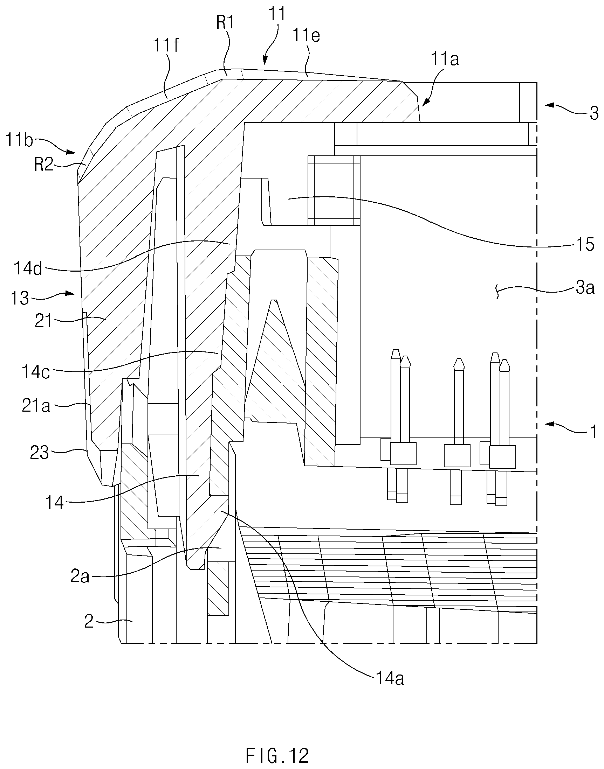

Referring to FIGS. 7 and 12, the anti-theft bracket 10 according to an exemplary embodiment of the present disclosure may include a snap-fit arm 14 extending vertically from the upper cover 11. The snap-fit arm 14 may be detachably attached to the controller 1. The snap-fit arm 14 may have a hook 14a provided on a bottom end thereof, and the hook 14a of the snap-fit arm 14 may be detachably inserted into the opening 2a of the lower case 2 of the controller 1 so that the anti-theft bracket 10 may be firmly fixed to the controller 1. The snap-fit arm 14 may be adjacent to or contact the side surface of the upper case 3. A width of the snap-fit arm 14 may be less than that of the outer cover 13. The snap-fit arm 14 may be parallel to the outer cover 13, and the snap-fit arm 14 may be spaced apart from the outer cover 13 toward the controller 1.

Referring to FIG. 7, two hooks 14a may be provided on the bottom end of the snap-fit arm 14, and an opening 14b may be formed between the two hooks 14a. The lower case 2 may have a positioning projection inserted into the opening 14b.

Referring to FIG. 7, the anti-theft bracket 10 according to an exemplary embodiment of the present disclosure may include a pair of first reinforcing portions 14c provided on an upper portion of the snap-fit arm 14, a pair of second reinforcing portions 14d provided above the pair of first reinforcing portions 14c, and a third reinforcing portion 14e located between the pair of second reinforcing portions 14d. Stiffness of the snap-fit arm 14 may be improved by the reinforcing portions 14c, 14d, and 14e. Each first reinforcing portion 14c may extend along an edge of the snap-fit arm 14, and each first reinforcing portion 14c may surround at least a portion of the snap-fit arm 14 including the edge of the snap-fit arm 14. Each second reinforcing portion 14d may extend along an edge of the corresponding first reinforcing portion 14c, and each second reinforcing portion 14d may surround at least a portion of the snap-fit arm 14 including the edge of the first reinforcing portion 14c. A thickness of the first reinforcing portion 14c may be greater than that of the snap-fit arm 14, and a thickness of the second reinforcing portion 14d and a thickness of the third reinforcing portion 14e may be greater than that of the first reinforcing portion 14c.

Referring to FIG. 7, the anti-theft bracket 10 according to an exemplary embodiment of the present disclosure may include a pair of engagement projections 15 protruding downward from the third edge portion 11c and the fourth edge portion 11d of the upper cover 11, respectively.

Referring to FIGS. 9 and 10, each engagement projection 15 may be inserted into the corresponding mounting recess 3b of the upper case 3. Accordingly, the pair of engagement projections 15 may be inserted into the pair of mounting recesses 3b of the upper case 3 so that the upper cover 11 of the anti-theft bracket 10 may be firmly fixed to the upper case 3.

As set forth above, the anti-theft bracket according to exemplary embodiments of the present disclosure may be designed to have a simple and compact structure so that it may be easily mounted on the controller provided in a narrow space of the vehicle.

The anti-theft bracket according to exemplary embodiments of the present disclosure may be designed to prevent the thief's tool from breaking a portion of the controller or removing the connector of the controller, thereby reliably preventing the vehicle theft.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

## Claims

1. An anti-theft bracket mounted on an edge of a controller adjacent to a connector, the anti-theft bracket comprising:
an upper cover covering a portion of the connector and the edge of the controller adjacent to the connector;
an outer cover covering a side surface of the controller; and
a snap-fit arm extending vertically from the upper cover and detachably attached to the controller.

2. The anti-theft bracket according to claim 1, wherein the upper cover includes a first edge portion located above the connector, and a second edge portion spaced apart outward from the edge of the controller, and
the outer cover extends vertically from the second edge portion.

3. The anti-theft bracket according to claim 2, further comprising a projection protruding vertically from the first edge portion of the upper cover.

4. The anti-theft bracket according to anyone of claims 1-3, wherein the outer cover includes a main cover portion covering the side surface of the controller, and a pair of side portions provided on both sides of the main cover portion.

5. The anti-theft bracket according to claim 4, wherein the outer cover further includes an extension cover portion extending downward from the main cover portion and the pair of side portions.

6. The anti-theft bracket according to claim 5, wherein the extension cover portion includes a chamfer edge portion provided on a bottom edge thereof, and
the chamfer edge portion has a chamfer surface.

7. The anti-theft bracket according to claim 6, wherein the chamfer edge portion includes an upper round portion provided on a top edge of the chamfer surface, and a lower round portion provided on a bottom edge of the chamfer surface.

8. The anti-theft bracket according to anyone of claims 4-7, further comprising a reinforcing portion provided on an upper portion of the snap-fit arm,
wherein a thickness of the reinforcing portion is greater than that of the snap-fit arm.

9. The anti-theft bracket according to anyone of claims 1-8, wherein the upper cover includes a third edge portion and a fourth edge portion connected between the first edge portion and the second edge portion, and
a pair of engagement projections protrude downward from the third edge portion and the fourth edge portion, respectively.

10. The anti-theft bracket according to claim 9, wherein the pair of engagement projections are inserted into mounting recesses of the controller, respectively.
